# EUROPEAN PATENT SPECIFICATION

(11) **EP 1 699 858 B1**
(45) Date of publication and mention of the grant of the patent: **26.08.2009**
(21) Application number: 03819205.0
(22) Date of filing: 31.12.2003
(51) Int. Cl.: C08K 5/00, C08K 5/053, C08K 5/098

(54) **NUCLEATED POLYOLEFINS AND PREPARATION THEREOF**
NUKLEIERTE POLYOLEFINE UND HERSTELLUNG DAVON
POLYOLEFINES NUCLEEES ET LEUR PREPARATION

(43) Date of publication of application: 13.09.2006
(73) Proprietor: Council of Scientific and Industrial Research, New Delhi 110 001 (IN)
(72) Inventor: VERNEKAR, Subhash P., c/o National Chemical Lab., Maharashtra (IN); CHELLASWAMY, Ramesh c/o National Chem Laboratory, Maharashtra (IN); SIVARAM, S., c/o National Chemical Laboratory, Maharashtra (IN)
(74) Representative: Manaton, Ross Timothy
(86) International application number: PCT/IN2003/000453
(87) International publication number: WO 2005/063867

(56) References cited:
- WO-A-98/29494
- US-A- 3 207 737
- US-A- 3 207 739
- DOMININGHAUS, HANS: "Die Kunststoffe und ihre Eigenschaften" 1998, SPRINGER , BERLIN , XP002291630 pages 55-56

## Description

### Field of the invention

The present invention relates to nucleated polyolefins and a process for the preparation thereof More particularly the present invention provides nucleated polyolefins using shellac based nucleating agents. The polyolefins provided by the present invention have improved crystallization temperature (Tc) and smaller spherulitic size and hence improved transparency characteristics. The polyolefin comprises a polymer selected from aliphatic polyolefins (PO) and copylomers containing at least one aliphatic olefin and one or more ethylenically unsaturated aliphatic comonomers and alkali/alkaline earth metal salts of aleuritic acid / shelloic acid, which are constituents of naturally occurring shellac alone or in combination with aliphatic fatty acids or its salts in an amount sufficient to improve crystallization temperature, reduce spherulitic size and hence improve transparency.

### Background of the invention

It is well know that incorporation of a nucleating agent (NA) in semicrystalline thermoplastic polymers such as polyolefins (PO) increases crystallization temperature, reduces spherulitic size and improves clarity and mechanical properties of the polymer. Generally, nucleating agents are high melting compounds which do not melt at processing temperature of the polymer and remain as discrete particles embedded in polymer melt. These insoluble particles behave as nucleator for the crystallization of polymer melt and generate innumerable crystallization sites resulting in innumerous small spherulites. Some nucleating agents are soluble in polymer melt but they solidify before crystallization of polymer melt and, thus, generate sites for crystallization. Addition of nucleating agents in polyolefins reduces the size of spherulites and improves clarity. It also enhances mechanical properties, increases crystallization temperature and reduces cycle time for injection moulding process.

A large variety of both organic and inorganic compounds have been used as nucleating agents. Most widely used nucleating agents are benzylidene derivatives of sorbitols, metal salts of organic carboxylic and sulfonic acids and phosphate salts. Of these nucleating agents, sorbitol derivatives are highly effective in improving transparency. However, use of sorbitol derivatives is not preferred in extrusion because, it tends to sublime during extrusion causing contamination of equipment parts and it gives odor. Moreover, they are very expensive. Hence the metal salts or organic acids, though less effective, are preferred in many apptications. Metallic salts of carboxylic acid belong to non-soluble category of nucleating agents. Sodium benzoate is an example of a nucleating agent belonging to metal salt of carboxylic acid class.

Metal salts of different mono, di and poly carboxylic aliphatic, substituted and un substituted aromatic acids, carboxylic acids containing cyclic and fused rings with alkali/alkaline earth metal belonging to IA, IIA and IIIAA group in periodic table have been used. United States Patents 5,912,292, and 3,852,237 describe the use of sodium benzoate as nucleating agent. United States Patents 5,714,531 and 5,998,576 describe the use of rosin acid salts as nucleating agents. Rosin is a naturally occurring material containing mixtures of acids such as abietic acid, dehydroabietic acid and many other acids. Metallic salts of dehydorabietic acid are reported to be effective nucleating agents. Shellac is another naturally occurring compound containing many carboxylic acids. However, it is not used as a nucleating agent.

Shellac is a resinous material obtained from insects. It is composed of mainly hydroxy fatty acids like aleuritic acid, butolic acid and other mono and di hydroxy acids along with hydroxy terpenic acids like jalaric acid, shelloic acid and laksholic acids. Aleuritic acid and jalaric acid and shelloic acid are the major constituents of shellac. Jalaric acid is easily converted to shelloic acid. Aleuritic acid having formula (1) 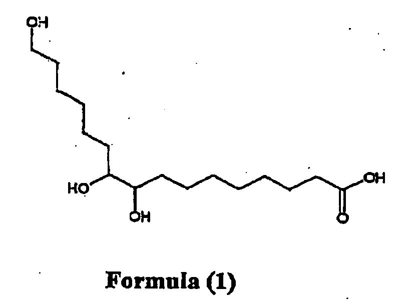 is a monobasic acid containing three hydroxyl groups whereas shelloic acid of formula (2) 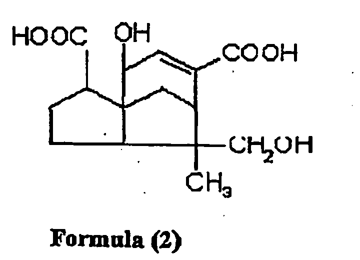 is a hydroxy terpenic acid having a fused ring system. Salts of carboxylic acid containing fused ring system have low volatility.

### Objects of the invention

The main object of this invention is to provide nucleated polyolifins and a process for preparation thereof utilizing shellac, a naturally occurring material containing compounds of formula (1) and formula (2), as nucleating agent for semi-crystalline homo and copolymers.

### Summary of the invention

Accordingly, the present invention provides a nucleated polyolefin having an alkali metal, alkaline earth metal or aluminium salt of aleuritic acid of formula 1 or shelloic acid of formula 2 present therein as the nucleating agent

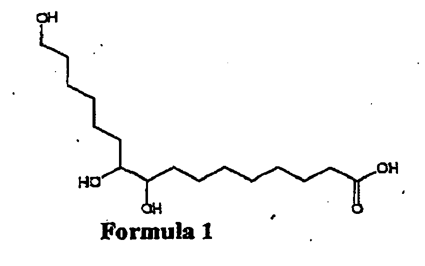

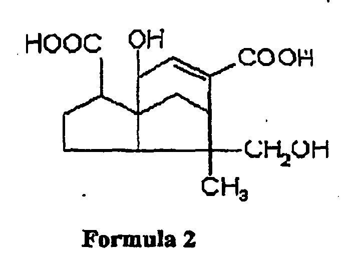

The present invention also provides a process for the preparation of a nucleated polyloefin comprising mixing a polyolefin with a nucleating agent selected from the group consisting of alkali metal alkaline earth metal and aluminium salts of aleuritic acid of formula 1 or shelloic acid of formula 2 or a mixture thereof and extruding the mixture at minimum temperature of melting point of the polyolefin to obtain the nucleate polyolefin.

In one embodiment of the invention the polyolefin is selected from the group consisting of polyolefin polymers of an aliphatic olefin and copolymers containing at least one aliphatic olefin and one or more ethylenically unsaturated comonomers.

In another embodiment of the invention, the comonomer is present in an amount of 10% or less based on the weight of olefin.

In another embodiment of the invention, the polyolefin polymer comprises polymers and copolymers of aliphatic mono olefins containing two to six carbon atoms having molecular weight of about 30,000 to about 500,000 preferably from 30,000 to about 300,000 such as polyethylene, polypropylene, ethylene-propylene copolymers.

In another embodiment of the invention, the nucleating agent is obtained by neutralizing the aleuritic and shelloic acids with an alkali metal hydroxide followed by removal of water under reduced pressure at a temperature of about 80° C followed by further drying at about 120°C under reduced pressure.

In another embodiment of the invention, the nucleating agent is prepared by treating a neutral aqueous solution of an alkali salt of aleuritic or shelloic acid with an equimolar solution of an alkaline earth chloride, washing the precipitated salt with water and drying at 1200°C under reduced pressure and isolating the water soluble salt by removal of water and grinding the salt in mortar and pestle.

In another embodiment of the invention, the metal salt comprises a salt of sodium, potassium, lithium, calcium or aluminum.

### Detailed description of the invention

The object of this invention is to prepare alkali metal, alkaline earth metal and aluminium salts of two major constituents of shellac namely, hydroxyl group containing aliphatic aleuric acid and shelloic acid having fused ring system. Another object of this invention is to utilize these salts as nucleating agents for polyolefins as a class and polypropylene in particular.

The present invention provides nucleated polyolefins having an alkaline metal, alkaline earth metal or aluminium salts of aleuritic of formula 1 or shelloic acids of formula 2 present as nucleating agent. The present invention also provides a process for the preparation of the nucleated polyloefins, using the nucleating agent having an alkali metal, alkaline earth metal or aluminium salts of aleuritic acid of formula 1 or shelloic acid of formula 2 present as nucleating agent. The process comprises mixing the polyolefin with the nucleating agent and optionally in combination with other additives such as antiodants, antislip agents, acid scavengers, lubricants or UV absorbers and extruding the mixture at minimum temperature of melting point of the polyolefin to obtain the nucleate polyolefin.

The polyolefin polymer used for the nucleated polyolefin includes polyolefin polymers of the aliphatic olefins and copolymers containing at least one aliphatic olefin and one or more ethylenically unsaturated comonomers. The comonomer if present is provided in minor quantities about 10% or even lower percent based on the weight of olefin. Such comonomers are provided to modify the properties of polymers.

Examples of the polymers whose transparency can be improved by incorporation of nucleating agent include polymer and copolymers of alphatic mono olefins containing two to about six carbon atoms having molecular weight of about 30,000 to about 500,000 preferably from 30,000 to about 300,000 such as polyethylene, polypropylene, ethylene-propylene copolymers.

In yet another feature the salts are prepared by a method, for example but not restricted to, by neutralizing the aleuritic and shelloic acids with an alkali metal hydroxides followed by removal of water under reduced pressure at, but not restrict to, 80° C followed by further drying at ~ 120°C under reduced pressure. The alkaline earth metal salts are prepared by treating neutral aqueous solution of alkali salts of aleuritic and shelloic acids with a equimolar solutions of alkaline earth chlorides. Precipitated salts are washed with water and dried at 1200°C under reduced pressure. Water soluble salts are isolated by removal of water as described in preparation of alkali salt. All the salts are further ground in a pestle and mortar of pulverized by suitable method before use.

The following examples are given by way of illustration and should not be constrained to limit the scope of the present invention.

### EXAMPLE 1

**Preparation of potassium salt of aleuritic acid:** in a 25ml round bottom flask, aleuritic acid (0.5g) was taken. To it was added aqueous solution of potassium hydroxide (0.092 g in 4 ml water). The solution was stirred well for 1 h, and water was removed from the solution under reduced pressure at ~ 80°C. The solid obtained was dried at high vacuum at 120°C.

The resulting potassium salt of aleuritic acid showed a melting point of 180°C. The solid was pulverized in a pestle mortar. 0.2 g of the above salt was mixed with 100 g of polypropylene resin and compounded along with other additives namely, Irganox 1010, 500 ppm; Ultranox - 626, 800 ppm; Hydrotalcite DHT 4A, 200ppm; Calcium stearate, 500 ppm; GMS - Finast 9500, 400 ppm on a Brabander single screw extruder. The extrusion temperature profile was 170-180 - 200 - 210°C, the screw RPM was 60. The residence time was 30 seconds. The extruded crystallization temperature (Tc). Crystallization temperature (To) values of these samples are given in Table-1.

Crystallization temperature was determined by DSC. The sample was heated to 210°C and held at that temperature for 2 minutes. After this holding period, the sample was cooled to 50°C at a rate of 10°C per minute. From the exotherin, the onset of crystallization and peak crystallization temperature were determined,

The spherulite size of the samples was determined by optical mocroscope. A thin film of the sample was sandwiched between two glass slides and kept in the hot stage attached to the microscope. The sample was heated to 210°C and held at that emperature for 2 minutes. After this holding period, the sample was cooled to 50°C at a rate 10° C per minute. During cooling the sample crystallized and spherulitic morphology could be observed through the microscope. The spherulite size was measured by the micrometer in the eye piece.

### EXAMPLE 2

**Preparation of aluminium salt of aleuritic acid:** in a 25ml round bottom flask, aleuritic acid (1.0 g) was taken. A solution of sodium hydroxide (0.1315 g dissolved in 4 ml water) was added to it. Aluminium chloride solution (0.145 g dissolved in 1.5 ml water) was added drop wise to the above solution with vigorous stirring. The precipitate formed was filtered, washed with water and dried at 120° C under reduced pressure. The solid was pulverized in a pestle mortar.

The sample (0.2 g) of above salt was mixed with 100 g of polypropylene resin and compounded along with other additives namely, Irganox 1010, 500 ppm; Ultranox - 626, 800 ppm; Hydrotalcite DHT 4A, 200ppm; Calcium stearate, 500 ppm; GMS - Finast 9500, 400 ppm on a Brabander single screw extruder. The extrusion temperature profile was 170 - 180 - 200 - 210° C. The screw RPM was 60. The residence time was 30 seconds. The extruded material was palletized and analyzed by DSC FOR determining crystallization temperature (Tc). Crystallization temperature (Tc) values of these samples are given in Table -1.

Crystallization temperature was determined by DSC. The sample was heated to 210° C and held at that temperature for 2 minutes. After this holding period, the sample was cooled to 50° C at a rate of 10° C per minute. From the exotherm, the onset of crystallization and peak crystallization temperature were determined.

The spherulite size of the samples was determined by optical microscope. A thin film of the sample was sandwiched between two glass slides and kept in the hot stage attached to the microscope. The sample was heated to 210° C and held at that temperature for 2 minutes. After this holding period, the sample was cooled to 50° C at a rate of 10° C per minute. During cooling the sample crystallized and spherulitic morphology could be observed through the microscope. The spherulite size was measured by the micrometer in the eye piece.

### EXAMPLE 3

**Preparation of calcium salt of aleuritic acid:** In a 25ml round bottom flask, aleuritic acid (0.5g) was taken. Aqueous sodium hydroxide (0.065 g in 4 ml water) solution was added to it drop wise with vigorous stirring to precipitate calcium salt. The salt was filtered, washed with water and dried at 120° C under reduced pressure. The resulting calcium salt of aleuritic acid showed a melting point of 155° C. The solid was pulverized in a pestle mortar.

(0.2 g) of above salt was mixed with 100 g of polypropylene resin and compounded along with other additives namely, Irganox. 1010, 500 ppm; Ultranox - 626, 800 ppm; Hydrotalcite DHT 4A, 200ppm; Calcium stearate, 500 ppm; GMS - Finast 9500, 400 ppm on a Brabander single screw extruder. The extrusion temperature profile was 170 - 180 - 200 - 210°C The screw RPM was 60. The residence time was 30 seconds. The extruded material was palletized and analyzed by DSC FOR determining crystallization temperature (Tc). Crystallization temperature (Tc) values of these samples are given in Table 1.

A thin film of the samples was sandwiched between two glass slides and kept in the hot stage attached to the microscope. The sample was heated to 210°C and held at that temperature for 2 minutes. After this holding period, the sample was cooled to 50°C at a rate of 10°C per minute. During cooling the sample crystallized and spherulitic morphology could be observed through the microscope. The spherulite size was measured by the micrometer in the eye piece.

### EXAMPLE 4

**Preparation of magnesium salt of aleuritic acid:** In a 25ml round bottom flask, aleuritic acid (0.5g) was dissolved in aqueous solution of sodium hydroxide (0.065 g in 4 ml water). Magnesium chloride solution (0.0783 g dissolved in 1.5 mL water) was added to it drop wise with vigorous stirring to precipitate magnesium salt. The salt was filtered, washed with water and dried at 120°C under reduced pressure. The melting point resulting magnesium salt of aleuritic acid is above 180°C. The solid was pulverized in a pestle mortar.

0.2 g of above salt was mixed with 100 g of polypropylene resin and compounded along with other additives namely, Irganox 1010, 500 ppm; Ultranox - 626, 800 ppm; Hydrotalcite DHT 4A, 200ppm; Calcium stearate, 500 ppm; GMS - Finast 9500, 400 ppm on a Brabander single screw extruder. The extrusion temperature profile was 170 - 180 - 200 - 210°C. The screw RPM was 60. The residence time was 30 seconds. The extruded material was palletized and analyzed by DSC FOR determining crystallization temperature (Tc). Crystallization temperature (Tc) values of these samples are given in Table -1.

Crystallization temperature wad determined by DSC. The sample was heated to 210°C and held at that temperature for 2 minutes. After theis holding period, the sample was cooled to 50°C at a rate of 10°C per minute. From the exotherm, the onset of crystallization and peak crystallization temperature were determined.

The spheulite size of the samples was determined by optical microscope. A thin film of the sample was sandwiched between two glass slides and kept in the hot stage attached to the microscope. The sample was heated to 210°C and held at that temperature for 2 minutes. After this holding period, the sample was cooled to 50°C at a rate of 10°C per minute. During cooling the sample crystallized and spherulitic morphology could be observed through the microscope. The spherulite size was measured by the micrometer in the eye piece.

### EXAMPLE 5

**Preparation of magnesium salt of shelloic acid:** In a 25ml round bottom flask, shelloic acid (0.2 g) was dissolved in alcoholic potassium hydroxide (0.076 g in 2 ml water) solution. Aqueous solution Magnesium chloride (0.06 g dissolved in 1.0 mL water) was added drop wise to above solution with vigorous stirring. Alcohol and water was distilled off under reduced pressure. The salt was dried under reduced pressure at 120°C (m.p. > 210°C). The solid was pulverized in a pestle mortar.

0.2 g of above salt was mixed with 100 g of polypropylene resin and compounded along with other additives namely, Irganox 1010, 500 ppm; Ultranox - 626, 800 ppm; Hydrotalcite DHT 4A, 200 ppm; Calcium stearate, 500 ppm; GMS - Finast 9500, 400 ppm on a Brabander single screw extruder. The extrusion temperature profile was 170 - 180 - 200 - 210°C The screw RPM was 60. The residence time was 30 seconds. The extruded material was palletized and analyzed by DSC for determining crystallization temperature (Tc). Crystallization temperature (Tc) values of these samples are given in Table -1.

Crystallization temperature was determined by DSC. The sample was heated to 210°C and held at the temperature for 2 minutes. After this holding period, the sample was cooled to 50°C at a rate of 10°c. per minute. From the exotherm, the onset of crystallization and peak crystallization temperature were determined.

The spherulite size of the sample was determined by optical microscope. A thin film of the sample was sandwiched between two glass slides and kept in the hot stage attached to the microscope. The sample was heated to 210°C and held at the temperature for 2 minutes. During cooling the sample crystallized and spherulitic morphology could be observed through the microscope. The spherulite size was measured by the micrometer in the eye piece.

### EXAMPLE 6

**Preparation of calcium salt of shelloic acid:** In a 25ml round bottom flask, shelloic acid (0.2 g) was dissolve in aqueous sodium hydroxide (0.0541 g in 4 ml water) solution. A solution of calcium chloride (0.075 g dissolved in 1.5 mL water) was added to it drop wise with vigorous stirring. Water was distilled off from the solution under reduced pressure at 80°C. The salt was dried at 120°C under reduced pressure the melting point resulting calcium salt of shelloic acid is above 261**°**C**.** the solid was pulverized in a pestle mortar.

The sample (0.2 g) of above salt was mixed with 100 g of polypropylene resin and compounded along with other additives namely, Irganox 1010, 500 ppm; Ultranox- 626, 800 ppm; Hydrotalcite DHT 4A, 200 ppm; Calcium stearate, 500 ppm; GMS-Finast 9500, 400 ppm on a Brabander single screw extruder. The extrusion temperature profile was 170-180 - 200 - 210°c. The screw RPM was 60. The residence time was 30 seconds. The extruded material was palletized and analyzed by DSC for determining crystallization temperature (Tc). Crystallization temperature (Tc) values of these samples are given in Table -1.

Crystallization temperature was determined by DSC. The sample wad heated to 210°C and held at that temperature for 2 minutes. After this holding period, the sample was cooled to 50°C at a rate of 10°C per minute. From the exotherm, the onset of crystallization and peak crystallization temperature were determined.

The spherulite size of the samples was determined by optical microscope. A thin film of the sample was sandwiched between two glass slides and kept in the hot stage attached to the microscope. The sample was heated to 210°C and held at that temperature for 2 minutes. After this holding period, the sample was cooled to 50°C at a rate of 10°C per minute. During cooling the sample crystallized and spherulitic morphology could be observed through the microscope. The spherulite size was measured by the micrometer in the eye piece:

### COMPARATIVE EXAMPLE 7

**Preparation of potassium salt of dehydroabietic acid:** In a clean 50 ml round bottom flask was taken dehydroabietic acid (1.0 g). It was dissolved in ethanol (5 ml). The acid was neutralize with ethanolic potassium hydroxide solution. The solution was stirred for 1 hour. Then the solvent was removed under vacuum maintaining temperature around 100°C.

After drying, the solid was ground in mortar to a fine powder. The resulting potassium salt of dehydroabeitic acid showed a melting point above 235°C. The solid was pulverized in a pestle mortar.

0.2 g of above salt was mixed with 100 g of polypropylene resin and compounded along with other additives namely, Irganox 1010, 500 ppm; Ultranox - 626, 800 ppm; Hydrotalcite DHT 4A, 200 ppm; Calcium stearate, 500 ppm; GMS - Finast 9500, 400 ppm on a Brabander single screw extruder. The extrusion temperature profile was 170 - 180 - 200 - 210°C. The screw RPM was 60. The residence time was 30 seconds. The extruded material was palletized and analyzed by DSC for determining crystallization temperature (Tc). Crystallization temperature (Tc) values of these samples are given in Table -1.

Crystallization temperature was determined by DSC. The sample was heated to 210°C and held at that temperature for 2 minutes. After this holding period the sample was cooled to 50°C at a rate of 10°C. per minute. Form the exotherm, the onset of crystallization and peak crystallization temperature were determined.

The spherulite size of the samples was determined by optical microscope. A thin film of the sample was sandwiched between two glass slides and kept in the hot stage attached to the microscope. The sample was heated to 210°C and held at that temperature for 2 minutes. After this holding period, the sample was cooled to 50°C at a rate of 10°C per minute. During cooling the sample crystallized and spherulitic morphology could be observed through the microscope. The spherulite size was measured by the micrometer in the eye piece.

The main advantage of the present invention is significant improvement in crystallization temperature (Tc) and reduction in spherulitic size of crystals of polyonefins thus, improving optical properties by using a salt of an acid namely, shelloic acid based on shellac, a naturally occurring indigenous material.

**Table - 1**

| No. | Example | Tc (°C) | Tc onset (°C) | Spherulite |
|---|---|---|---|---|
| 1. | Example -1 | 101 | 107 | 25 |
| 2. | Example -2 | 105 | 112 | - |
| 3. | Example -3 | - | - | - |
| 4. | Example -4 | - | - | - |
| 5. | Example -5 | 102 | 111 | - |
| 6. | Example -6 | 108 | 113 | 14 |
| 8. | Comparative example -7 | 105 | 105 | 50 |

## Claims

1. A nucleated polyolefin having an alkali metal, alkaline earth metal or aluminium salt of aleuritic acid of formula 1 or shelloic acid of formula 2 present therein as the nucleating agent

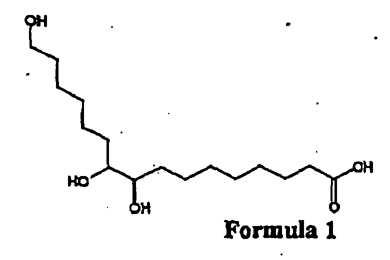

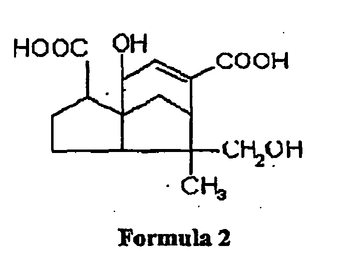

2. A process for the preparation of a nucleated polyloefin comprising mixing a polyolefin with a nucleating agent selected from the group consisting of alkali, metal, alkaline earth metal and aluminium salts of aleuritic acid of formula 1 or shelloic acid of formula 2 or a mixture thereof and extruding the mixture at minimum temperature of melting point of the polyolefin to obtain the nucleated polyolefin.

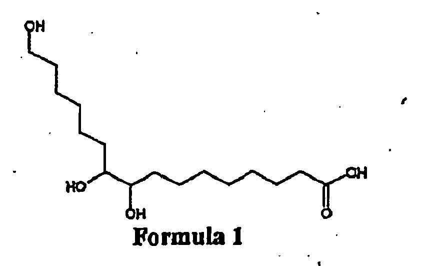

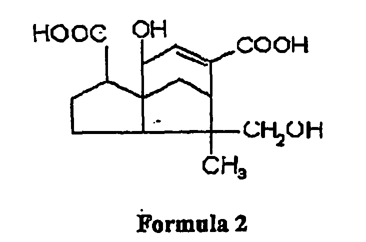

3. A process as claimed in claim. 2 wherein the polyolefin is selected from the group consisting of polyolefin polymers of an aliphatic olefin and copolymers containing at least one aliphatic olefin and one or more ethylenically unsaturated comonomers.

4. A process as claimed in claim 3 wherein the comononomer is present in an amount of 10% or less based on the weight of olefin.

5. A process as claimed in claim 2 wherein the polyolefin polymer comprises polymers and copolymers of aliphatic mono olefins containing two to six carbon atoms having molecular weight 30,000 to 500,000.

6. A process as claimed in claim 5 wherein the molecular weight of the polyolefin is in the range of 30,000 to 300,000.

7. A process as claimed in claim 2 wherein the polyolefin is selected from the group consisting of polyethylene, polypropylene and ethylene-propylene copolymers.

8. A process as claimed in claim 2 wherein the nucleating agent is obtained by neutralizing the aleuritic or shelloic acid with an alkali metal hydroxide followed by removal of water under reduced pressure at a temperature of about 80° C followed by further drying at about 120°C under reduced pressure.

9. A process as claimed in claim 2 wherein the nucleating agent is prepared by treating a neutral aqueous solution of an alkali salt of aleuritic or shelloic acid with an equimolar solution of an alkaline earth chloride, washing the precipitated salt with water and drying at 1200°C under reduced pressure and isolating the water soluble salt by removal of water and grinding the salt in mortar and pestle.

10. A process as claimed in claim 2 wherein the metal salt comprises a salt of sodium, potassium, lithium, calcium or aluminium.

11. A process as claimed in claim 2 wherein the quantity of nucleating agent used in polylefin is not less than 0.2% w/w based on polyolefin

## Patentansprüche

1. Nukleiertes Polyolefin, in welchem ein Alkalimetall-, Erdalkalimetall- oder Aluminiumsalz von Aleuritinsäure der Formel 1 oder Schellolsäure der Formel 2 als Nukleierungsmittel vorliegt.

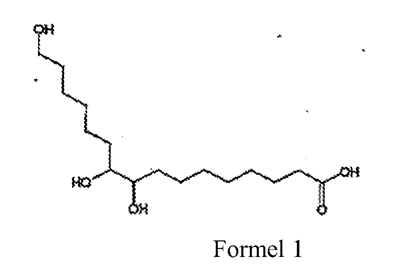

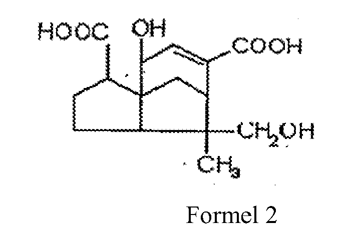

2. Verfahren für die Herstellung eines nukleierten Polyolefins, welches das Mischen eines Polyolefins mit einem Nukleierungsmittel, ausgewählt aus der Gruppe bestehend aus Alkalimetall-, Erdalkalimetall- und Aluminiumsalzen von Aleuritinsäure der Formel 1 oder Schellolsäure der Formel 2 oder einer Mischung hiervon, und das Extrudieren der Mischung bei einer Mindesttemperatur des Schmelzpunkts des Polyolefins umfasst, um das nukleierte Polyolefin zu erhalten.

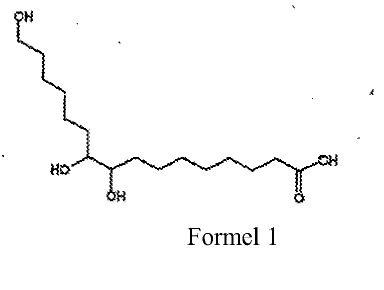

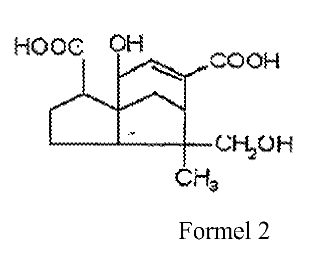

3. Verfahren nach Anspruch 2, wobei das Polyolefin aus der Gruppe ausgewählt ist bestehend aus Polyolefmpolymeren eines aliphatischen Olefins und Copolymeren, die mindestens ein aliphatisches Olefin und ein oder mehrere ethylenisch ungesättigte Comonomere enthalten.

4. Verfahren nach Anspruch 3, wobei das Comonomer in einer Menge von 10% oder weniger bezogen auf das Gewicht des Olefins vorhanden ist.

5. Verfahren nach Anspruch 2, wobei das Polyolefinpolymer Polymere und Copolymere aliphatischer Monoolefine umfasst, die zwei bis sechs Kohlenstoffatome enthalten, und ein Molekulargewicht von 30.000 bis 500.000 hat.

6. Verfahren nach Anspruch 5, wobei das Molekulargewicht des Polyolefins im Bereich von 30.000 bis 300.000 liegt.

7. Verfahren nach Anspruch 2, wobei das Polyolefin aus der Gruppe bestehend aus Polyethylen, Polypropylen und Ethylen-Propylen-Copolymeren ausgewählt ist.

8. Verfahren nach Anspruch 2, wobei das Nukleiermittel durch Neutralisieren der Aleuritinsäure oder Schellolsäure mit einem Alkalimetallhydroxid, gefolgt durch Entfernen von Wasser unter reduziertem Druck bei einer Temperatur von etwa 80 °C, gefolgt von weiterem Trocknen bei etwa 120 °C unter reduziertem Druck gewonnen wird.

9. Verfahren nach Anspruch 2, wobei das Nukleiermittel durch Behandeln einer neutralen wässrigen Lösung eines Alkalisalzes von Aleuritinsäure oder Schellolsäure mit einer äquimolaren Lösung eines Erdalkalichlorids, Waschen des ausgefällten Salzes mit Wasser und Trocknen bei 1200 °C unter reduziertem Druck und Isolieren des wasserlöslichen Salzes durch Entfernen von Wasser und Vermahlen des Salzes mit einem Stößel in einem Mörser hergestellt wird.

10. Verfahren nach Anspruch 2, wobei das Metallsalz ein Salz von Natrium, Kalium, Lithium, Calcium oder Aluminium umfasst.

11. Verfahren nach Anspruch 2, wobei die Menge an Nukleiermittel, die im Polyolefin verwendet wird, nicht weniger als 0,2 Gew.-% bezogen auf das Polyolefin beträgt.

## Revendications

1. Polyoléfine nucléée ayant un sel de métal alcalin, de métal alcalino-terreux ou d'aluminium d'acide aleuritique de formule 1 ou d'acide shelloïque de formule 2 présent dans celle-ci en tant qu'agent de nucléation :

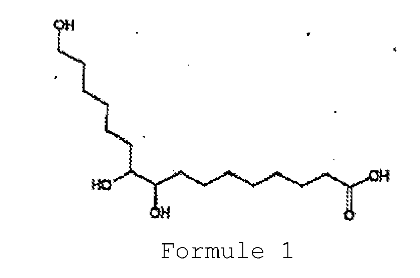

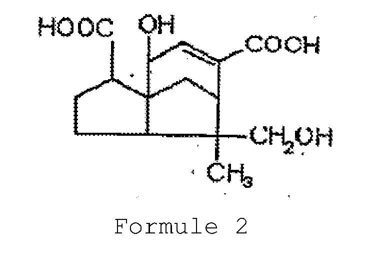

2. Procédé de préparation d'une polyoléfine nucléée comprenant le mélange d'une polyoléfine avec un agent de nucléation choisi dans le groupe constitué par les sels de métal alcalin, de métal alcalino-terreux et d'aluminium d'acide aleuritique de formule 1 ou d'acide shelloïque de formule 2 ou d'un mélange de ceux-ci, et l'extrusion du mélange à une température minimale de point de fusion de la polyoléfine pour obtenir la polyoléfine nucléée.

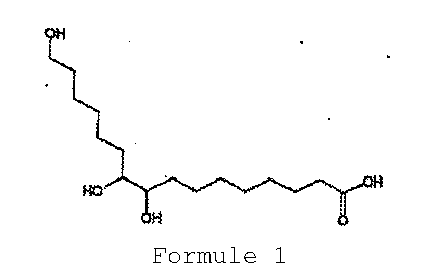

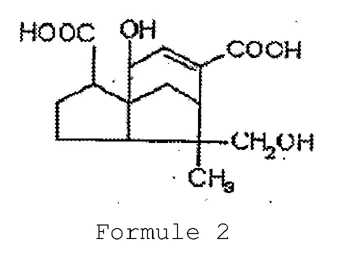

3. Procédé selon la revendication 2, dans lequel la polyoléfine est choisie dans le groupe constitué par les polyoléfines polymères d'une oléfine aliphatique et les copolymères contenant au moins une oléfine aliphatique et un ou plusieurs comonomères à insaturation éthylénique.

4. Procédé selon la revendication 3, dans lequel le comonomère est présent dans une quantité de 10% ou moins sur la base du poids de l'oléfine.

5. Procédé selon la revendication 2, dans lequel la polyoléfine polymère de comprend des polymères et des copolymères de mono-oléfines aliphatiques contenant deux à six atomes de carbone ayant une masse moléculaire de 30 000 à 500 000.

6. Procédé selon la revendication 5, dans lequel la masse moléculaire de la polyoléfine se situe dans la plage de 30 000 à 300 000.

7. Procédé selon la revendication 2, dans lequel la polyoléfine est choisie dans le groupe constitué par le polyéthylène, le polypropylène et les copolymères éthylène-propylène.

8. Procédé selon la revendication 2, dans lequel l'agent de nucléation est obtenu par une neutralisation de l'acide aleuritique ou de l'acide shelloïque avec un hydroxyde de métal alcalin suivie par une élimination de l'eau sous une pression réduite à une température d'environ 80°C suivie par un nouveau séchage à environ 120°C sous pression réduite.

9. Procédé selon la revendication 2, dans lequel l'agent de nucléation est préparé par traitement d'une solution aqueuse neutre d'un sel de métal alcalin d'acide aleuritique ou d'acide shelloïque avec une solution équimolaire d'un chlorure de métal alcalino-terreux, lavage du sel ayant précipité avec de l'eau, et séchage à 1200°C sous une pression réduite, et isolement du sel soluble dans l'eau par élimination d'eau et broyage du sel dans un mortier et pilon.

10. Procédé selon la revendication 2, dans lequel le sel métallique comprend un sel de sodium, de potassium, de lithium, de calcium ou d'aluminium.

11. Procédé selon la revendication 2, dans lequel la quantité d'agent de nucléation utilisée dans la polyoléfine n'est pas inférieure à 0,2% p/p sur la base de la polyoléfine.
